# FASCICULE DE BREVET EUROPEEN

(11) **EP 3 670 387 B1**
(45) Date de publication et mention de la délivrance du brevet: **21.04.2021**
(21) Numéro de dépôt: 19218091.7
(22) Date de dépôt: 19.12.2019
(51) Int. Cl.: B65D 90/52, B29C 70/44, B29C 70/84, B29C 65/70, B29C 65/00, B29D 22/00, B65D 88/12, B29D 22/02, B65D 90/08

(54) **PROCEDE DE FABRICATION D'UNE CITERNE EN MATERIAUX COMPOSITES POUR LE TRANSPORT DE PRODUITS LIQUIDES ET CITERNE ASSOCIEE**
VERFAHREN ZUR HERSTELLUNG EINES TANKS AUS VERBUNDMATERIAL FÜR DEN TRANSPORT VON FLÜSSIGEN PRODUKTEN, UND ENTSPRECHENDER TANK
METHOD FOR MANUFACTURING A TANK FROM COMPOSITE MATERIALS FOR TRANSPORTING LIQUID PRODUCTS AND ASSOCIATED TANK

(30) Priorité: 21.12.2018 FR 1873732
(43) Date de publication de la demande: 24.06.2020
(73) Titulaire: Etablissements MAGYAR, 21000 Dijon (FR)
(72) Inventeur: MAGYAR, Daniel, 75012 Paris (FR); MAGYAR, Laurent, 75001 Paris (FR)
(74) Mandataire: Cabinet Camus Lebkiri

(56) Documents cités:
- EP-A2- 2 759 758
- JP-A- H01 176 899

## Description

### DOMAINE TECHNIQUE DE L'INVENTION

La présente invention se rapporte au domaine des citernes en matériaux composites utilisées de manière générale pour le stockage et le transport de produits liquides.

L'invention concerne plus particulièrement un procédé de fabrication d'une citerne en matériaux composites intégrant au moins un dispositif pour réduire les oscillations du produit stocké, tel qu'un brise-lames.

L'invention concerne également une citerne en matériaux composite pour le stockage et le transport de produits liquides intégrant au moins un dispositif pour réduire les oscillations du produit stocké, tel qu'un brise-lames.

### ARRIÈRE PLAN TECHNOLOGIQUE DE L'INVENTION

Les citernes utilisées pour le transport de produits liquides sont généralement équipées de brise-lames qui sont positionnés à l'intérieur de la cuve. Ils permettent en effet de réduire les oscillations, ou les effets de ballotement (« sloshing » en langue anglaise), du liquide stocké dans les citernes lors des différentes accélérations/décélérations dans l'espace de la citerne.

Les brise-lames sont généralement circulaires et de forme bombée et présentent au moins une ouverture, généralement centrale, pour permettre le passage du liquide de part et d'autre du brise-lames, le brise-lames autorisant le passage du liquide de part et d'autre du brise-lames tout en coupant l'effet de ballotement du liquide dans la cuve.

D'autre part, pour assurer une polyvalence des produits transportés (liquides alimentaires, liquides chimiques, hydrocarbures), les citernes doivent être régulièrement lavées, voire désinfectées. Pour assurer un lavage de grande efficacité, notamment pour les citernes transportant des produits alimentaires, il est connu de descendre dans la citerne, via des trous d'homme ou des orifices de visite de la cuve, des boules de lavage dont le jet nettoie l'intégralité de la surface interne sans laisser une aucune zone « d'ombre » au jet.

Or, l'intégration de brise-lames dans la cuve peut complexifier cette opération de lavage.

Pour remédier à cet inconvénient, il a été proposé, dans le domaine des citernes métalliques, différentes solutions techniques de brise-lames métalliques avec des ouvertures centrales plus ou moins importantes. Le document EP2058245 présente plus particulièrement une architecture de brise-lames métallique présentant une légère courbure et une ouverture centrale intégrale. Cette conception particulière permet de réaliser la fonction « anti-ballotement » du brise-lames, tout en facilitant le nettoyage intégral de l'intérieur de la citerne, en plaçant judicieusement les dispositifs de lavage au centre des trous d'homme.

Toutefois, cette architecture pose beaucoup de difficultés lorsqu'il s'agit de l'intégrer dans les citernes. En effet, du fait de cette ouverture centrale intégrale, on se retrouve avec des problèmes de tenue mécanique, notamment pour résister aux différentes pressions hydrostatiques du liquide stocké lors des différentes accélérations.

Pour cela, le document EP2058245 proposer d'augmenter la rigidité des brise-lames monolithiques à ouverture centrale intégrale en ménageant un renfort structurel au niveau des extrémités (bord latéral) du brise-lames. Ce renfort structurel présente de plus un profil particulier permettant d'éviter des « zones d'ombres » au lavage.

Toutefois, la solution proposée dans le document EP2058245 permet de répondre aux besoins spécifiques des citernes métalliques et n'est absolument pas transposable dans le domaine des citernes en matériaux composites.

De manière générale, dans le domaine des citernes en matériaux composites, l'intégration des brise-lames à l'intérieur de la cuve est rendue plus complexe et plus difficile que pour les citernes métalliques, notamment du fait du procédé de fabrication de ces citernes par enroulement filamentaire.

Ainsi, pour des questions de coût de fabrication de ces citernes, il est rare que les fabricants proposent des cuves avec des brise-lames dans les citernes en matériaux composites. Les brise-lames sont plus généralement utilisés dans les citernes métalliques.

De plus, l'intégration d'un brise-lames à ouverture centrale intégrale comme décrit dans le document EP2058245, qui permettrait de faciliter le lavage des citernes en matériaux composite occasionne des problématiques de rigidité de la structure globale de la citerne, ce type de brise-lames affaiblissant grandement la rigidité circonférentielle de la citerne en matériaux composites

Le document EP2759758A2 divulgue un réservoir de stockage à double parois pour le transport d'un fluide cryogénique comprenant une paroi intérieure délimitant un volume de stockage pour du fluide, une paroi extérieure et un vide dans l'espace inter parois entre les parois intérieure et extérieure, dans lequel la paroi extérieure comprend une structure multicouche.

### EXPOSE DE L'INVENTION

Dans ce contexte, l'invention vise à proposer un procédé de fabrication d'une citerne en matériaux composites amélioré permettant de résoudre les problèmes mentionnés précédemment.

Le procédé de fabrication selon l'invention permet d'intégrer facilement des brise-lames dans la structure de la citerne, et ainsi réduire les coûts de fabrication, tout en améliorant la résistance globale de la citerne ainsi que la tenue mécanique des brise-lames une fois intégrés dans la structure globale de la citerne.

A cette fin, l'invention concerne un procédé, selon la revendication 1, de fabrication d'une citerne en matériaux composites pour le transport de produits liquides ou pulvérulents.

Le procédé selon l'invention peut également présenter une ou plusieurs des caractéristiques ci-dessous, considérées individuellement ou selon toutes les combinaisons techniquement possibles.

Avantageusement, le procédé comporte une étape de fabrication d'un brise-lames en matériaux composites.

Avantageusement, l'étape de fabrication d'un brise-lames est réalisée au moyen d'un procédé de fabrication parmi la liste suivante : procédé de moulage sous vide, procédé de moulage sous pression, procédé de moulage au contact.

Avantageusement, l'étape de fabrication d'un brise-lames est réalisée au moyen d'un procédé de fabrication d'infusion de résine sous vide.

Avantageusement, l'étape d'intégration d'un brise-lames en matériaux composites entre ledit premier tronçon cylindrique et ledit deuxième tronçon cylindrique comporte :
- une sous-étape de positionnement dudit brise-lames entre ledit premier tronçon cylindrique et ledit deuxième tronçon cylindrique, de sorte qu'une partie du premier tronçon cylindrique et une partie du deuxième tronçon cylindrique chevauchent au moins une partie de la surface externe du brise-lames ;
- une sous-étape de collage dudit brise-lames sur ledit premier tronçon cylindrique et sur ledit deuxième tronçon cylindrique.

Avantageusement, l'étape d'intégration d'un brise-lames en matériaux composites entre ledit premier tronçon cylindrique et ledit deuxième tronçon cylindrique, ledit brise-lames comportant une semelle périphérique et une paroi, ladite étape comportant :
- une sous-étape de positionnement dudit brise-lames entre ledit premier tronçon cylindrique et ledit deuxième tronçon cylindrique, de sorte qu'au moins une partie de la surface interne de la semelle périphérique du brise-lames soit en contact avec le premier tronçon cylindrique et avec le deuxième tronçon cylindrique ;
- une sous-étape de collage dudit brise-lames sur ledit premier tronçon cylindrique et sur ledit deuxième tronçon cylindrique.

Avantageusement, l'étape de fabrication d'un premier tronçon cylindrique et d'un deuxième tronçon cylindrique en matériaux composites comporte :
- une première sous-étape d'enroulement de fibres de renfort sur un mandrin cylindrique présentant un diamètre extérieur correspondant au diamètre intérieur de la citerne à fabriquer,
- une deuxième sous-étape d'application d'une résine.

Avantageusement, l'étape de renforcement de la surface extérieure de la structure intermédiaire est réalisée par un procédé d'enroulement filamentaire consistant à enrouler des bandes de renfort préimprégnées d'une résine sur la surface extérieure de la structure intermédiaire.

Avantageusement, le procédé comporte une étape de stratification consistant à appliquer une couche de renfort au niveau de la jonction entre le premier et/ou le deuxième tronçon cylindrique, et au moins une partie dudit au moins un brise-lames, de manière à recouvrir au moins une partie dudit premier et/ou dudit deuxième tronçon cylindrique, et au moins une partie dudit au moins un brise-lames.

Avantageusement, la couche de renfort de l'étape de stratification est positionnée à l'intérieur et/ou à l'extérieur de la structure intermédiaire.

L'invention a également pour objet une citerne, selon la revendication 11, en matériaux composites pour le transport de produits liquides obtenu par le procédé de fabrication selon l'invention.

Avantageusement, la citerne comporte une cuve présentant au moins un compartiment de stockage intégrant au moins un brise-lames en matériaux composites.

Grâce au procédé de fabrication selon l'invention, la citerne présente une masse réduite par rapport aux citernes de l'état de la technique de même capacité, intégrant des brise-lames en matériaux composites intégrant une ouverture centrale pour faciliter notamment le nettoyage de la citerne.

Avantageusement, le brise-lames intégrant la citerne selon l'invention présente deux portions distinctes, indépendantes, espacées l'une de l'autre et positionnées dans un même plan transverse.

Avantageusement, ladite citerne est un véhicule citerne, une caisse mobile citerne, un conteneur citerne ou encore un wagon citerne.

L'invention sera mieux comprise à la lumière de la description qui suit.

### BREVE DESCRIPTION DES FIGURES

D'autres caractéristiques et avantages de l'invention ressortiront à la lecture de la description qui suit, en référence aux figures annexées :
- la figure 1 représente une vue en coupe selon un plan vertical longitudinal d'une citerne en matériaux composites pour le transport de produits liquides ou pulvérulents obtenue par le procédé de fabrication selon l'invention ;
- la figure 2 représente une vue en coupe selon un plan vertical transversal de la citerne représentée à la figure 1, illustrant un exemple de réalisation d'un brise-lames en matériaux composites intégré dans la cuve de la citerne ;
- la figure 3 représente un schéma synoptique illustrant les principales étapes du procédé de fabrication selon l'invention ;
- la figure 4 représente schématiquement quatre tronçons cylindriques réalisés lors de la première étape du procédé de fabrication selon l'invention ;
- la figure 5 représente une vue en coupe, selon le plan A-A de la figure 2, d'un premier mode d'assemblage d'un brise-lames avec deux tronçons cylindriques lors de la troisième étape du procédé selon l'invention ;
- la figure 6 représente une vue en coupe, selon le plan A-A de la figure 2, d'un deuxième mode d'assemblage d'un brise-lames avec deux tronçons cylindriques lors de la troisième étape du procédé selon l'invention ;

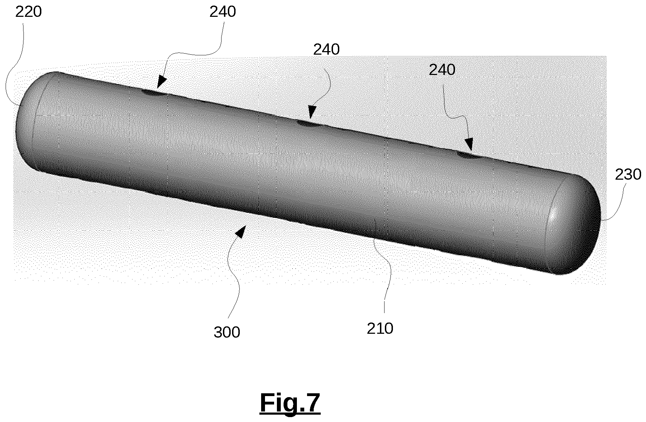

- la figure 7 représente une vue d'ensemble de la structure intermédiaire assemblée lors de la quatrième étape du procédé selon l'invention.

### DESCRIPTION DETAILLEE

Sauf précision contraire, les adjectifs « intérieur », « interne », « extérieur », « externe » sont utilisés dans la présente demande en référence à une direction radiale de la citerne de sorte que la partie intérieure, interne d'un élément est, suivant une direction radiale, plus proche de l'axe longitudinal de la citerne que la partie extérieure, externe du même élément.

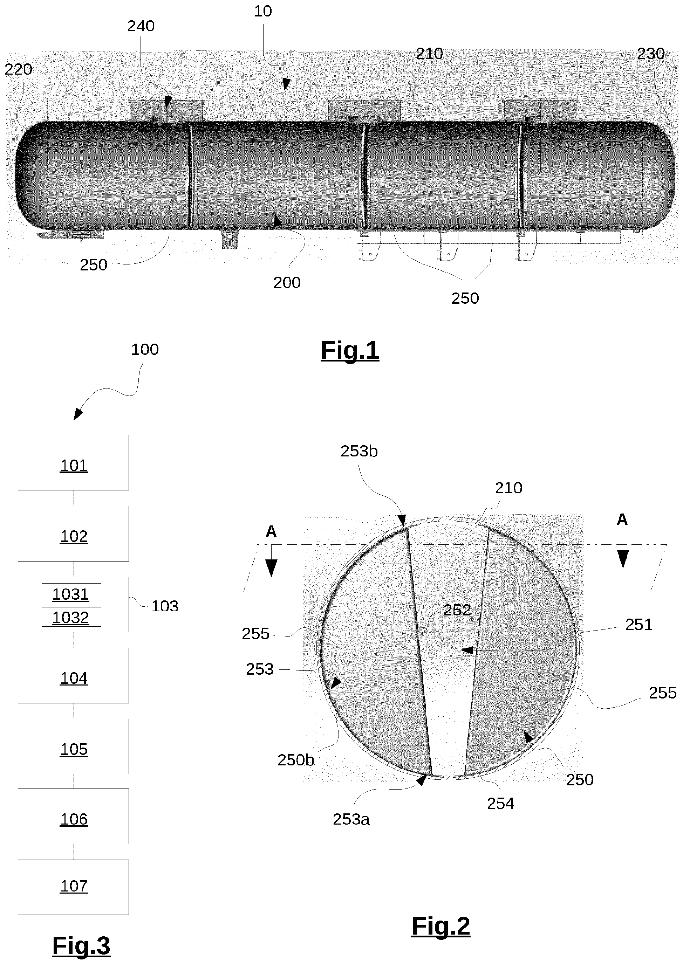

En référence à la figure 1, la citerne 10 en matériaux composites selon l'invention comporte une cuve 200 définissant au moins un compartiment de stockage dans lequel au moins un brise-lames 250 est ménagé, trois brise-lames 250 sont représentés à l'intérieur de la cuve 200 sur la figure 1. La cuve 200 de la citerne 10 est composée classiquement d'une virole cylindrique 210 et de deux fonds de cuve 220, 230 fermant les extrémités de la virole 210. La cuve 200 comporte également au moins un orifice 240 ménagé en partie supérieure de la virole 210 utilisé pour le remplissage, l'inspection, le lavage ou la maintenance de la citerne, comme par exemple un trou d'homme.

Les brise-lames 250 de la cuve 200 sont fabriqués en matériaux composites et présentent une ouverture 251 ménagée dans une région centrale du brise-lames 250 permettant le passage du liquide stocké dans la cuve de part et d'autre du brise-lames 250, tout en réduisant les oscillations, ou les effets de ballotement du liquide stocké.

Selon l'exemple de réalisation, représenté à la figure 2, le brise-lames 250 en matériaux composites de la cuve 200 est préférentiellement un brise-lames présentant une ouverture centrale intégrale 251.

On entend par ouverture centrale intégrale, une ouverture ménagée dans une position sensiblement centrale du brise-lames qui s'étend diamétralement de part et d'autre des bordures périphériques du brise-lames, de sorte que le brise-lames à ouverture centrale intégrale est composé de deux portions 250a, 250b positionnées idéalement dans un même plan transversal, et indépendantes l'une de l'autre.

Comme indiqué précédemment, le brise-lames 250 présente une forme sensiblement circulaire, constitué de deux portions indépendantes 250a, 250b semi-circulaire positionnées dans un même plan transversal, l'espace séparent les deux portions 250a, 250b correspondant aux dimensions de l'ouverture centrale 251.

Chaque portion 250a, 250b d'un brise-lames 250 est composée :
- d'une semelle périphérique 253, de forme semi-circulaire, destinée à venir en contact avec la virole 210 de la cuve 200,
- d'un bord latéral 252, sensiblement rectiligne et s'étendant sensiblement entre les deux extrémités de la semelle périphérique 253,
- d'une paroi 255 s'étendant entre la semelle périphérique 253 et le bord latéral 252, la paroi 255 étant orientée sensiblement selon un plan transversal par rapport à la direction longitudinale de la cuve 200, configurée pour bloquer les mouvements du liquide stocké.

Les brise-lames 250 sont réalisés en matériaux composites et présentent une structure dite « sandwich » formée par l'assemblage de deux peaux en fibres de verre, carbone ou aramide imprégnées de résine et d'une âme (ou cœur) en matériau léger tels que mousse cellulaire, balsa, nid d'abeille, etc.

Les brise-lames 250 selon l'invention peuvent également présenter des renforts additionnels 254 positionnés au niveau des zones de jonction entre le bord latéral 252 et la semelle périphérique 253, i.e. sensiblement au niveau des extrémités inférieure 253a et supérieure 253b de la semelle périphérique 253.

Les renforts additionnels 254 sont par exemple des couches de fibres de verre, de carbone, d'aramide, et préférentiellement de carbone.

La construction en « sandwich » des brise-lames 250 permet avantageusement de garantir la rigidité nécessaire à la reprise des efforts dus aux différentes pressions hydrostatiques du liquide stocké lors des différentes accélérations de la citerne.

En référence à la figure 3, la première étape 101 du procédé de fabrication 100 selon l'invention consiste à réaliser une pluralité de tronçons cylindriques 211a, 211b, 211c, 211d, chacun constituant une portion de la virole 210 de la cuve 200. Chaque tronçon cylindrique 211a, 211b, 211c, 211d est réalisé indépendamment par un procédé de stratification au contact, consistant dans une première sous-étape à déposer et à enrouler des renforts de fibres tissées ou non tissées, par exemple des fibres de verre ou des fibres de carbone, autour d'un mandrin cylindrique (non représenté) faisant office de moule, le diamètre extérieur du mandrin cylindrique utilisé correspond au diamètre intérieur final de la cuve 200.

A titre d'exemple, les tronçons cylindriques 211a à 211d sont réalisés en déposant et en enroulant des voiles de verre et des mats de verre, autour du mandrin cylindrique.

Dans une deuxième sous étape, la résine est ensuite appliquée sur les renforts déposés sur le mandrin cylindrique. Les résines utilisées sont préférentiellement des résines thermodurcissables telles que les résines vinylester, époxy connues pour leur grande résistance chimique aux solvants et aux produits corrosifs, acides, bases.

Le nombre de tronçons cylindriques 211a,211b, 211c, 211d ainsi que les longueurs des tronçons cylindriques dépendent de la position et du nombre de brise-lames 250 que le fabricant souhaite intégrer dans la cuve 200. Dans l'exemple de réalisation présenté à la figure 1, la cuve 200 de la citerne 10 comporte trois brise-lames 250, par conséquent, la virole 210 est composée de quatre tronçons cylindriques 211a à 211d indépendants.

Cette première étape 101 peut être suivi d'une étape de reprise des différents tronçons cylindriques 211a, 211b, 211c consistant à découper les extrémités de manière à obtenir des tronçons présentant une longueur prédéfinie.

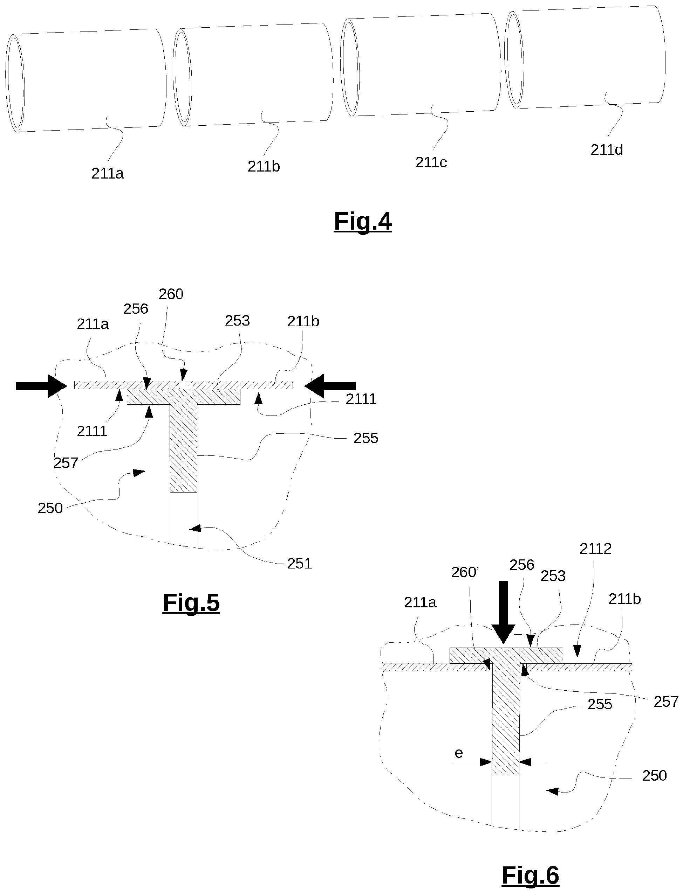

La figure 4 représente schématiquement les quatre tronçons cylindriques 211a, 211b, 211c, 211d réalisés lors de la première étape 101 du procédé de fabrication selon l'invention.

La deuxième étape 102 du procédé de fabrication 100 selon l'invention consiste à fabriquer séparément les brise-lames 250 pour les intégrer ensuite dans la cuve 200. Les brise-lames 250 sont par exemple fabriqués par un procédé de moulage sous vide, un procédé de moulage sous pression ou encore un procédé de moulage au contact.

Avantageusement, les brise-lames 250 sont fabriqués au moyen d'un procédé d'infusion.

Classiquement, un procédé d'infusion consiste à la mise sous vide, dans un moule, fermé par une bâche étanche à l'air, de renforts dits « secs » qui sont imprégnés par la suite par une résine qui est aspirée par la dépression créée dans le moule. Ce procédé d'infusion est un procédé connu utilisé classiquement pour la réalisation de pièces composites présentant une structure monolithique ou « sandwich ».

Les différentes couches de renfort sont drapées et avantageusement positionnées dans le moule d'infusion, avec une ou plusieurs orientation(s) des fibres de renfort de manière à garantir la rigidité globale nécessaire de la pièce finale.

Les renforts utilisés pour la réalisation des brise-lames sont par exemple des fibres de verre, des fibres de carbone, des fibres d'aramide ou encore toutes autres fibres utilisées classiquement pour la réalisation d'une structure « sandwich ».

La résine utilisée pour la réalisation des brise-lames 250 est par exemple une résine époxy.

La troisième étape 103 du procédé de fabrication 100 selon l'invention consiste à réaliser la virole 210 par l'assemblage des brise-lames 250 réalisés lors de la deuxième étape 102 avec les tronçons cylindriques 211a, 211b, 211c, 211d réalisés lors de la première étape 101.

La troisième étape 103 comporte une première sous-étape 1031 de positionnement et d'intégration d'un brise-lames 250 entre deux corps cylindriques 211a, 211b, 211c, 211d. Dans l'exemple de réalisation de la citerne illustrée à la figure 1, cette étape consiste à positionner un premier brise-lames 250 entre le premier tronçon cylindrique 211a, et le deuxième tronçon cylindrique 211b, un deuxième brise-lames 250 entre le deuxième tronçon cylindrique 211b et le troisième tronçon cylindrique 211c, et un troisième brise-lames 250 entre le troisième tronçon cylindrique 211c et le quatrième tronçon cylindrique 211d.

La figure 5 représente une vue en coupe selon le plan horizontal A-A de la figure 2, d'un premier exemple d'assemblage d'un brise-lames 250 avec deux tronçons cylindriques 211a, 211b.

Selon ce premier exemple d'assemblage, l'assemblage de la virole 210 est réalisé par recouvrement de la surface externe 256 de la semelle périphérique 253 des brise-lames 250. Le mode d'assemblage sera décrit en particulier entre les deux premiers tronçons cylindriques 211a et 211b.

Dans ce premier exemple de réalisation, deux tronçons cylindriques 211a et 211b sont assemblés l'un à l'autre par l'intermédiaire d'un brise-lames 250 de manière à constituer une structure formant la virole 210 complète. Chaque tronçon cylindrique 211a, 211b vient s'emboiter de part et d'autre du brise-lames 250, et plus spécifiquement autour d'une portion de la semelle périphérique 253 du brise-lames 250, i.e. au niveau de la surface externe 256 de la semelle périphérique 253. A ce stade de la fabrication, la paroi des tronçons cylindriques 211a, 211b est relativement souple, de sorte qu'elle est légèrement déformable et vient épouser la surface externe 256 de la semelle périphérique 253 du brise-lames 250. Les tronçons cylindriques 211a, 211b sont ensuite glissés jusqu'à une position définie sur la surface externe 256 de la semelle périphérique 253.

Dans ce premier exemple de réalisation, le brise-lames 250 est fixe et on vient emboiter par un mouvement de glissement (symbolisé par la flèche représentée à la figure 5) deux tronçons cylindriques 211a, 211b de part et d'autre du brise-lames 250.

De manière à faciliter et à garantir le positionnement des tronçons cylindriques 211a, 211b autour du brise-lames 250, celui-ci peut comporter au moins une butée (non représentée), par exemple agencé dans le plan médian du brise-lames, positionné sur le pourtour de la surface externe 256 (i.e. la face en regard des tronçons cylindriques) de la semelle périphérique 253, et faisant saillie par rapport cette surface externe 256. L'utilisation d'une telle butée de positionnement permet également de s'assurer de bon positionnement de l'ensemble tronçon cylindrique/brise-lames permettant ainsi d'optimiser la reprise des efforts.

Dans cet exemple de réalisation, on remarque que les deux tronçons cylindriques 211a, 211b positionnés autour du brise-lames 250 ne sont pas joint de sorte qu'il existe un léger espace 260 inter-tronçon entre deux tronçons cylindriques consécutifs.

Ainsi, dans cet exemple de réalisation, chaque tronçon cylindrique 211a, 211b de part et d'autre du brise-lames 250 vient recouvrir au moins une portion de la semelle périphérique 253 dudit brise-lames 250, de sorte qu'une première portion de la semelle périphérique 253 d'un brise-lames 250 se retrouve à l'intérieur du volume défini par un premier tronçon cylindrique 211a, et qu'une deuxième portion se retrouve à l'intérieur du volume définie par un deuxième tronçon cylindrique 211b.

Selon une deuxième sous-étape 1032, les tronçons cylindriques 211a, 211b sont solidarisés au brise-lames 250 par collage de manière garantir un positionnement optimisé et de manière à faciliter les opérations suivantes du procédé.

Le collage est réalisé au niveau des surfaces de contact entre les tronçons cylindriques 211a, 211b et le brise-lames 250, c'est-à-dire par collage d'une portion de la surface externe 256 de la semelle périphérique 253 sur la surface interne 2111 de la paroi du premier tronçon cylindrique 211a et du deuxième tronçon cylindrique 211b.

La figure 6 représente une vue en coupe selon le plan horizontal A-A de la figure 2, illustrant plus en détail un second exemple d'assemblage d'un brise-lames 250 avec deux tronçons cylindriques 211a, 211b, lors de la première sous-étape 1031 de positionnement et d'intégration d'un brise-lames 250 entre deux tronçons cylindriques 211a, 211b.

Selon ce deuxième exemple d'assemblage, l'assemblage de la virole 210 est réalisé par l'insertion du brise-lames 250 entre deux tronçons cylindriques 211a, 211b prépositionnés, via l'extérieur des tronçons cylindriques. Le mode d'assemblage sera décrit en particulier entre les deux premiers tronçons cylindriques 211a et 211b représentés à la figure 6.

Dans ce deuxième exemple d'assemblage de la virole 210, dans un premier temps, deux tronçons cylindriques 211a et 211b sont alignés par rapport à leur axe de révolution et pré-positionnés l'un par rapport à l'autre en ménageant un espace 260' inter-tronçon entre les deux tronçons cylindriques 211a, 211b. Dans un deuxième temps, un brise-lames 250 est inséré, par l'extérieur des tronçons (selon la direction indiquée par la flèche), entre les deux tronçons cylindriques 211a, 211b, de sorte que le brise-lames 250 vient combler l'espace 260' inter-tronçon, la surface interne 257 de la semelle périphérique 253 du brise-lames 250 venant en appui sur la surface externe 2112 des tronçons cylindriques 211a, 211b.

L'espace 260' inter-tronçon présente une largeur supérieure à l'épaisseur de la paroi 255 du brise-lames 250 et inférieure à la largeur de la semelle périphérique 253 de sorte que celle-ci forme des moyens de butée venant en butée sur la surface externe 2112 des tronçons cylindriques 211a, 211b.

Dans cet exemple de réalisation, on remarque que la surface externe de la virole 210 ainsi formée est continue et formée par l'alternance de surface externe 2112 de tronçons cylindriques 211a, 211b et de surface externe 256 de semelle périphérique 253 de brise-lames 250.

Selon la deuxième sous-étape 1032 de collage, le brise-lames 250 est solidarisé aux tronçons cylindriques 211a, 211b par collage, de manière garantir le positionnement et à faciliter les opérations suivantes. Le collage est réalisé au niveau des surfaces de contact entre les tronçons cylindriques 211a, 211b et le brise-lames 250, c'est-à-dire par collage d'une portion de la surface externe 2112 des tronçons cylindriques 211a, 211b, et d'au moins une portion de la surface interne 257 de la semelle périphérique 253.

Dans une quatrième étape 104, au moins une couche de stratification, par exemple de type anti-corrosion, est appliquée au niveau des jonctions entre le brise-lames 250 et les tronçons cylindriques 211a, 211b collés au dit brise-lames 250.

Avantageusement, la couche de stratification est ménagée de manière à recouvrir toute la jonction périphérique entre le brise-lames 250 et les tronçons cylindriques 211a, 211b.

Cette quatrième étape 104 peut comporter une première sous-étape 1401 de dépôt d'une première couche de stratification à l'intérieur des tronçons cylindriques 211a, 211b, la couche de stratification étant positionnée de manière à recouvrir à la fois une partie de la surface interne 2111 du tronçon cylindrique 211a, 211b et une partie du brise-lames 250.

Selon le premier exemple de réalisation illustré à la figure 5, la première couche de stratification est déposée de manière à recouvrir à la fois une partie de la surface interne 2111 du tronçon cylindrique 211a, 211b et au moins une partie de la base de la semelle périphérique 253.

Selon le deuxième exemple de réalisation illustré à la figure 6, la première couche de stratification est déposée de manière à recouvrir à la fois une partie de la surface interne 2111 du tronçon cylindrique et au moins une partie de la paroi 255 du brise-lames 250.

La quatrième étape 104 peut comporter une deuxième sous-étape (1402) de dépôt d'une deuxième couche de stratification à l'extérieur des tronçons cylindriques, et plus spécifiquement à la jonction entre deux tronçons cylindriques 211a, 211b comme illustré à la figure 5 ou entre le brise-lames 250 et les tronçons cylindriques 211a, 211b comme illustré à la figure 6.

Les couches de stratification déposées lors de cette étape 104 sont formés par des fibres de renfort tissées ou non tissées et permettent notamment de renforcer la virole 210 assemblée lors de la troisième étape 103 du procédé de fabrication.

Selon une cinquième étape 105, les fonds, réalisés au préalable, sont assemblés sur la virole 210, de manière à fermer les extrémités débouchantes de la virole 210, l'ensemble formant une structure intermédiaire 300.

Cette cinquième étape 105 comporte une sous-étape de dépôt d'au moins une couche de stratification au niveau de la jonction entre les fonds 220, 230 et la virole 210 de manière à assurer l'assemblage entre la virole 210 et les fonds 220, 230.

Cette cinquième étape 105 peut également comporter une sous-étape de découpe d'orifice 240 dans la virole 210 pour la réalisation de trous d'homme 240.

Le procédé selon l'invention peut également comporter, au préalable à cette cinquième étape de réalisation de la structure intermédiaire 300, une étape de fabrication de fond de cuve au moyen d'un procédé de moulage au contact (par exemple par stratification au contact), d'un procédé de moulage sous vide (par exemple un procédé d'infusion) ou encore d'un procédé de moulage sous pression.

Selon une sixième étape 106, la structure intermédiaire 300 formée lors de la cinquième étape 105 est renforcée par le dépôt d'une couche extérieure de renforcement en matériaux composites, de manière à former la cuve finale 200 de la citerne 10.

Avantageusement cette sixième étape est réalisée au moyen d'un procédé d'enroulement filamentaire.

Le procédé d'enroulement filamentaire permet ainsi de déposer à l'extérieur de la structure intermédiaire 300 plusieurs couches de renfort superposées les unes aux autres, de manière continue, et avec des orientations différentes sur l'ensemble de la structure intermédiaire 300.

La structure intermédiaire 300 formée lors de l'étape précédente permet notamment de faciliter cette étape de renforcement par enroulement filamentaire, notamment parce qu'il est possible d'utiliser la structure intermédiaire 300 comme mandrin pour l'enroulement des renforts à la surface de la structure intermédiaire 300.

Cette étape d'enroulement filamentaire consiste à déposer des bandes de renfort, préimprégnées d'une résine, de type thermodurcissable, sur la structure intermédiaire 300 par couches croisées. Les couches déposées sont alternativement orientées de manière circonférentielle (les fibres sont orientées radialement) et de manière hélicoïdale (les fibres sont orientées selon un angle défini par rapport à la direction longitudinale de la cuve).

Cette étape d'enroulement filamentaire est complétée par la mise en étuve de la structure intermédiaire bobinée.

Selon une septième étape 107, des accessoires de cuve, telles que les trous d'homme, les berces d'appui pour relier la cuve à un châssis, des échelles pour la manutention, des bacs de rétention, etc sont assemblés sur la structure intermédiaire bobinée, par collage et/ou boulonnage, de manière à former la cuve finale 200 (présentée précédemment en référence à la figure 1).

## Revendications

1. Procédé de fabrication d'une citerne (10) en matériaux composites pour le transport de produits liquides ou pulvérulents, ladite citerne (10) comportant une cuve (200) présentant un moins un compartiment de stockage intégrant au moins un brise-lames (250), ledit procédé de fabrication comportant :
- une étape (101) de fabrication d'un premier tronçon cylindrique (211a) et d'un deuxième tronçon cylindrique (211b) en matériaux composites ;
- une étape (103) d'intégration d'au moins un brise-lames (250) en matériaux composites entre ledit premier tronçon cylindrique (211a) et ledit deuxième tronçon cylindrique (211b) de manière à former une virole (210) ; ledit brise-lames (250) formant une jonction entre ledit premier tronçon cylindrique (211a) et ledit deuxième tronçon cylindrique (211b) ;
- une étape (105) d'intégration de fonds (220, 230) aux extrémités de ladite virole (210) de manière à former une structure intermédiaire (300) ;
- une étape (106) de renforcement de la surface extérieure de la structure intermédiaire (300), réalisée lors de l'étape précédente, par l'application d'une couche extérieure de renforcement en matériaux composites; ladite citerne (10) comporte une cuve (200) présentant au moins un compartiment de stockage intégrant au moins un brise-lames (250) présentant une semelle périphérique (253) de forme semi-circulaire comportant une surface externe (256) et une surface interne (257), et l'étape d'intégration d'au moins un brise-lames (250) en matériaux composites est réalisée de manière à ce que l'une des deux surfaces interne (257) ou externe (256) est directement en contact avec ledit premier tronçon cylindrique (211a) et ledit deuxième tronçon cylindrique (211b).

2. Procédé de fabrication d'une citerne (10) en matériaux composites pour le transport de produits liquides ou pulvérulents selon la revendication 1 **caractérisé en ce qu'**il comporte une étape (102) de fabrication d'un brise-lames (250) en matériaux composites.

3. Procédé de fabrication d'une citerne (10) en matériaux composites pour le transport de produits liquides ou pulvérulents selon la revendication 2 **caractérisé en ce que** l'étape (102) de fabrication d'un brise-lames (250) est réalisée au moyen d'un procédé de fabrication parmi la liste suivante : procédé de moulage sous vide, procédé de moulage sous pression, procédé de moulage au contact.

4. Procédé de fabrication d'une citerne (10) en matériaux composites pour le transport de produits liquides ou pulvérulents selon l'une des revendications 2 à 3 **caractérisé en ce que** l'étape (102) de fabrication d'un brise-lames (250) est réalisée au moyen d'un procédé de fabrication d'infusion de résine sous vide.

5. Procédé de fabrication d'une citerne en matériaux composites pour le transport de produits liquides ou pulvérulents selon l'une des revendications 1 à 4 **caractérisé en ce que** l'étape (103) d'intégration d'un brise-lames en matériaux composites entre ledit premier tronçon cylindrique (211a) et ledit deuxième tronçon cylindrique (211b) comporte :
- une sous-étape (1031) de positionnement dudit brise-lames (250) entre ledit premier tronçon cylindrique (211a) et ledit deuxième tronçon cylindrique (211b), de sorte qu'une partie du premier tronçon cylindrique (211a) et une partie du deuxième tronçon cylindrique (211b) chevauchent au moins une partie de la surface externe (256) du brise-lames (250) ;
- une sous-étape (1032) de collage dudit brise-lames (250) sur ledit premier tronçon cylindrique (211a) et sur ledit deuxième tronçon cylindrique (211b).

6. Procédé de fabrication d'une citerne en matériaux composites pour le transport de produits liquides ou pulvérulents selon l'une des revendications 1 à 4 **caractérisé en ce que** l'étape (103) d'intégration d'un brise-lames (250) en matériaux composites entre ledit premier tronçon cylindrique (211a) et ledit deuxième tronçon cylindrique (211b), ledit brise-lames (250) comportant la semelle périphérique (253) et une paroi (255), ladite étape comportant :
- une sous-étape (1031) de positionnement dudit brise-lames (250) entre ledit premier tronçon cylindrique (211a) et ledit deuxième tronçon cylindrique (211b), de sorte qu'au moins une partie de la surface interne de la semelle périphérique (253) du brise-lames (250) soit en contact avec le premier tronçon cylindrique (211a) et avec le deuxième tronçon cylindrique (211b) ;
- une sous-étape (1032) de collage dudit brise-lames (250) sur ledit premier tronçon cylindrique (211a) et sur ledit deuxième tronçon cylindrique (211b).

7. Procédé de fabrication d'une citerne en matériaux composites pour le transport de produits liquides ou pulvérulents selon l'une des revendications 1 à 6 **caractérisé en ce que** l'étape (101) de fabrication d'un premier tronçon cylindrique (211a) et d'un deuxième tronçon cylindrique (211b) en matériaux composites comporte :
- une première sous-étape d'enroulement de fibres de renfort sur un mandrin cylindrique présentant un diamètre extérieur correspondant au diamètre intérieur de la citerne à fabriquer,
- une deuxième sous-étape d'application d'une résine.

8. Procédé de fabrication d'une citerne en matériaux composites pour le transport de produits liquides ou pulvérulents selon l'une des revendications 1 à 7 **caractérisé en ce que** l'étape (106) de renforcement de la surface extérieure de la structure intermédiaire (300) est réalisée par un procédé d'enroulement filamentaire consistant à enrouler des bandes de renfort préimprégnées d'une résine sur la surface extérieure de la structure intermédiaire (300).

9. Procédé de fabrication d'une citerne en matériaux composites pour le transport de produits liquides ou pulvérulents selon l'une des revendications 1 à 8 **caractérisé en ce qu'**il comporte une étape (140) de stratification consistant à appliquer une couche de renfort au niveau de la jonction entre le premier (211a) et/ou le deuxième tronçon cylindrique (211b), et au moins une partie dudit au moins un brise-lames (250), de manière à recouvrir au moins une partie dudit premier (211a) et/ou dudit deuxième (211b) tronçon cylindrique, et au moins une partie dudit au moins un brise-lames (250).

10. Procédé de fabrication d'une citerne en matériaux composites pour le transport de produits liquides ou pulvérulents selon la revendication 9 **caractérisé en ce que** la couche de renfort de l'étape de stratification est positionnée à l'intérieur et/ou à l'extérieur de la structure intermédiaire (300).

11. Citerne en matériaux composites pour le transport de produits liquides ou pulvérulents mise en œuvre par le procédé de fabrication selon l'une des revendications 1 à 10 **caractérisée en ce qu'**elle comporte une cuve (200) présentant au moins un compartiment de stockage intégrant au moins un brise-lames (250).

12. Citerne en matériaux composites pour le transport de produits liquides ou pulvérulents selon la revendication 11 **caractérisée en ce que** le brise-lames (250) présente deux portions (250a, 250b) indépendantes, espacées l'une de l'autre et positionnées dans un même plan transverse.

13. Citerne en matériaux composites pour le transport de produits liquides ou pulvérulents selon l'une des revendications 11 à 12 **caractérisée en ce que** ladite citerne est un véhicule citerne, ou une caisse mobile citerne, ou un conteneur citerne ou un wagon citerne.

## Patentansprüche

1. Herstellungsverfahren eines Großbehälters (10) aus Verbundmaterialien für den Transport von flüssigen oder pulverförmigen Produkten, wobei der genannte Großbehälter (10) ein Becken (200) umfasst, das wenigstens eine Speicherabteilung umfasst, die wenigstens einen Wellenbrecher (250) beinhaltet, wobei das genannte Herstellungsverfahren umfasst:
- einen Herstellungsschritt (101) eines ersten zylindrischen Abschnitts (211a) und eines zweiten zylindrischen Abschnitts (211b) aus Verbundmaterialien;
- einen Integrationsschritt (103) wenigstens eines Wellenbrechers (250) aus Verbundmaterialien zwischen dem genannten ersten zylindrischen Abschnitt (211a) und dem genannten zweiten zylindrischen Abschnitt (211b) derart, dass eine Dichtungshülse (210) gebildet wird; wobei der genannte Wellenbrecher (250) eine Verbindung zwischen dem genannten ersten zylindrischen Abschnitt (211a) und dem genannte zweiten zylindrischen Abschnitt (211b) bildet;
- einen Integrationsschritt (105) von Böden (220, 230), an den Enden der genannten Dichtungshülse (210) derart, dass eine Zwischenstruktur (300) gebildet wird;
- einen Verstärkungsschritt (106) der äußeren Oberfläche der Zwischenstruktur (300), die bei dem voranstehenden Schritt realisiert wird, per Anwendung einer äußeren Verstärkungsschicht aus Verbundmaterialien; wobei der genannte Großbehälter (10) ein Becken (200) umfasst, das wenigstens eine Speicherabteilung aufweist, die wenigstens einen Wellenbrecher (250) beinhaltet, der eine umlaufende Sohle (253) in halbkreisförmiger Form aufweist, die eine äußere Oberfläche (256) und eine innere Oberfläche (257) umfasst, und der Integrationsschritt wenigstens eines Wellenbrechers (250) aus Verbundmaterialien derart realisiert wird, dass die eine der zwei internen (257) oder externen (256) Oberflächen direkt mit dem genannten ersten zylindrischen Abschnitt (211a) und dem genannten zweiten zylindrischen Abschnitt (211b) in Kontakt ist.

2. Herstellungsverfahren eines Großbehälters (10) aus Verbundmaterialien für den Transport von flüssigen oder pulverförmigen Produkten gemäß Anspruch 1, **dadurch gekennzeichnet, dass** es einen Herstellungsschritt (102) eines Wellenbrechers (250) aus Verbundmaterialien umfasst.

3. Herstellungsverfahren eines Großbehälters (10) aus Verbundmaterialien für den Transport von flüssigen oder pulverförmigen Produkten gemäß Anspruch 2, **dadurch gekennzeichnet, dass** der Herstellungsschritt (102) eines Wellenbrechers (250) mittels eines Herstellungsverfahrens aus der folgenden Liste realisiert wird: Abformverfahren unter Vakuum, Abformverfahren unter Druck, Abformverfahren mit Kontakt.

4. Herstellungsverfahren eines Großbehälters (10) aus Verbundmaterialien für den Transport von flüssigen oder pulverförmigen Produkten gemäß einem der Ansprüche 2 bis 3, **dadurch gekennzeichnet, dass** der Herstellungsschritt (102) eines Wellenbrechers (250) mittels eines Infusions-Herstellungsverfahrens mit Harz unter Vakuum realisiert wird.

5. Herstellungsverfahren eines Großbehälters (10) aus Verbundmaterialien für den Transport von flüssigen oder pulverförmigen Produkten gemäß einem der Ansprüche 1 bis 4, **dadurch gekennzeichnet, dass** der Integrationsschritt (103) eines Wellenbrechers aus Verbundmaterialien zwischen dem genannten ersten zylindrischen Abschnitt (211a) und dem genannten zweiten zylindrischen Abschnitt (211b) umfasst:
- einen Positionierungs-Unterschritt (1031) des genannten Wellenbrechers (250) zwischen dem genannten ersten zylindrischen Abschnitt (211a) und dem genannten zweiten zylindrischen Abschnitt (211b) derart, dass ein Teil des ersten zylindrischen Abschnittes (211a) und ein Teil des zweiten zylindrischen Abschnittes (211b) wenigstens einen Teil der externen Oberfläche (256) des Wellenbrechers (250) überlappen;
- einen Verklebungs-Unterschritt (1032) des genannten Wellenbrechers (250) auf dem genannten ersten zylindrischen Abschnitt (211a) und auf dem genannten zweiten zylindrischen Abschnitt (211b).

6. Herstellungsverfahren eines Großbehälters aus Verbundmaterialien für den Transport von flüssigen oder pulverförmigen Produkten gemäß einem der Ansprüche 1 bis 4, **dadurch gekennzeichnet, dass** der Integrationsschritt (103) eines Wellenbrechers (250) aus Verbundmaterialien zwischen dem genannten ersten zylindrischen Abschnitt (211a) und dem genannten zweiten zylindrischen Abschnitt (211b), wobei der genannte Wellenbrecher (250) die umlaufende Sohle (253) und eine Wand (255) umfasst, wobei der genannte Schritt umfasst:
- einen Positionierungs-Unterschritt (1031) des genannten Wellenbrechers (250) zwischen dem genannten ersten zylindrischen Abschnitt (211a) und dem genannten zweiten zylindrischen Abschnitt (211b) derart, dass wenigstens ein Teil der internen Oberfläche der umlaufenden Sohle (253) des Wellenbrechers (250) mit dem ersten zylindrischen Abschnitt (211a) und mit dem zweiten zylindrischen Abschnitt (211b) in Kontakt ist;
- einen Verklebungs-Unterschritt (1032) des genannten Wellenbrechers (205) auf dem genannten ersten zylindrischen Abschnitt (211a) und auf dem genannten zweiten zylindrischen Abschnitt (211b).

7. Herstellungsverfahren eines Großbehälters aus Verbundmaterialien für den Transport von flüssigen oder pulverförmigen Produkten gemäß einem der Ansprüche 1 bis 6, **dadurch gekennzeichnet, dass** der Herstellungsschritt (101) eines ersten zylindrischen Abschnitts (211a) und eines zweiten zylindrischen Abschnitts (211b) aus Verbundmaterialien umfasst:
- einen ersten Aufwickel-Unterschritt von Verstärkungsfasern auf einem zylindrischen Spannfutter, das einen Außendurchmesser aufweist, der einem Innendurchmesser des herzustellenden Großbehälters entspricht,
- einen zweiten Anwendungs-Unterschritt eines Harzes.

8. Herstellungsverfahren eines Großbehälters aus Verbundmaterialien für den Transport von flüssigen oder pulverförmigen Produkten gemäß einem der Ansprüche 1 bis 7, **dadurch gekennzeichnet, dass** der Verstärkungsschritt (106) der äußeren Oberfläche der Zwischenstruktur (300) durch ein Draht-Aufwickelverfahren realisiert wird, das im Aufwickeln der Verstärkungsbänder, die mit einem Harz präimprägniert sind, auf der äußeren Oberfläche der Zwischenstruktur (300) besteht.

9. Herstellungsverfahren eines Großbehälters aus Verbundmaterialien für den Transport von flüssigen oder pulverförmigen Produkten gemäß einem der Ansprüche 1 bis 8, **dadurch gekennzeichnet, dass** es einen Schichtungsschritt (140) umfasst, der im Anwenden einer Verstärkungsschicht an der Verbindung zwischen dem ersten (211a) und / oder dem zweiten zylindrischen Abschnitt (211b) und wenigstens einem Teil des genannten wenigstens einen Wellenbrechers (250) derart besteht, dass wenigstens ein Teil des genannten ersten (211a) und / oder des genannten zweiten (211b) zylindrischen Abschnitts und wenigstens ein Teil des genannten wenigstens einen Wellenbrechers (250) abgedeckt wird.

10. Herstellungsverfahren eines Großbehälters aus Verbundmaterialien für den Transport von flüssigen oder pulverförmigen Produkten gemäß Anspruch 9, **dadurch gekennzeichnet, dass** die Verstärkungsschicht des Schichtungsschritts innerhalb und / oder außerhalb der Zwischenstruktur (300) positioniert ist.

11. Großbehälter aus Verbundmaterialien für den Transport von flüssigen oder pulverförmigen Produkten, der durch das Herstellungsverfahren gemäß einem der Ansprüche 1 bis 10 umgesetzt wird, **dadurch gekennzeichnet, dass** er ein Becken (200) umfasst, das wenigstens eine Speicherabteilung umfasst, die wenigstens einen Wellenbrecher (250) beinhaltet.

12. Großbehälter aus Verbundmaterialien für den Transport von flüssigen oder pulverförmigen Produkten gemäß Anspruch 11, **dadurch gekennzeichnet, dass** der Wellenbrecher (250) zwei unabhängige Abschnitte (250a, 250b) aufweist, die voneinander beabstandet und in einer und derselben quer verlaufenden Ebene positioniert sind.

13. Großbehälter aus Verbundmaterialien für den Transport von flüssigen oder pulverförmigen Produkten gemäß einem der Ansprüche 11 oder 12, **dadurch gekennzeichnet, dass** der genannte Großbehälter ein Tankfahrzeug oder ein mobiler Tankkasten oder ein Tankbehälter oder ein Tankwaggon ist.

## Claims

1. A method for manufacturing a tank (10) of composite materials for transporting liquid or powdery products, said tank (10) including a vessel (200) having at least one storage compartment integrating at least one breakwater (250), said manufacturing method including:
- a step (101) of manufacturing a first cylindrical segment (211a) and a second cylindrical segment (211b) of composite materials;
- a step (103) of integrating at least one breakwater (250) of composite materials between said first cylindrical segment (211a) and said second cylindrical segment (211b) so as to form a shell (210); said breakwater (250) forming a junction between said first cylindrical segment (211a) and said second cylindrical segment (211b);
- a step (105) of integrating bottoms (220, 230) into the ends of said shell (210) so as to form an intermediate structure (300);
- a step (106) of reinforcing the external surface of the intermediate structure (300), made during the previous step, by applying an external reinforcement layer of composite materials;
said tank (10) includes a vessel (200) having at least one storage compartment integrating at least one breakwater (250) having a semi-circular shaped peripheral base plate (253) including an outer surface (256) and inner surface (257), and the step of integrating at least one breakwater (250) of composite materials is performed so that one of both inner (257) or outer (256) surfaces is directly in contact with said first cylindrical segment (211a) and said second cylindrical segment (211b).

2. The method for manufacturing a tank (10) of composite materials for transporting liquid or powdery products according to claim 1, **characterised in that** it includes a step (102) of manufacturing a breakwater (250) of composite materials.

3. The method for manufacturing a tank (10) of composite materials for transporting liquid or powdery products according to claim 2, **characterised in that** the step (102) of manufacturing a breakwater (250) is performed by means of a manufacturing method from the following list: vacuum moulding method, pressure die-casting method, contact moulding method.

4. The method for manufacturing a tank (10) of composite materials for transporting liquid or powdery products according to one of claims 2 to 3, **characterised in that** the step (102) of manufacturing a breakwater (250) is performed by means of a vacuum resin infusion manufacturing method.

5. The method for manufacturing a tank of composite materials for transporting liquid or powdery products according to one of claims 1 to 4, **characterised in that** the step (103) of integrating a breakwater of composite materials between said first cylindrical segment (211a) and said second cylindrical segment (211b) includes:
- a sub-step (1031) of positioning said breakwater (250) between said first cylindrical segment (211a) and said second cylindrical segment (211b), so that part of the first cylindrical segment (211a) and part of the second cylindrical segment (211b) overlap at least part of the outer surface (256) of the breakwater (250);
- a sub-step (1032) of bonding said breakwater (250) to said first cylindrical segment (211a) and to said second cylindrical segment (211b).

6. The method for manufacturing a tank of composite materials for transporting liquid or powdery products according to one of claims 1 to 4, **characterised in that** the step (103) of integrating a breakwater (250) of composite materials between said first cylindrical segment (211a) and said second cylindrical segment (211b), said breakwater (250) including the peripheral base plate (253) and a wall (255), said step including:
- a sub-step (1031) of positioning said breakwater (250) between said first cylindrical segment (211a) and said second cylindrical segment (211b), so that at least part of the inner surface of the peripheral base plate (253) of the breakwater (250) is in contact with the first cylindrical segment (211a) and with the second cylindrical segment (211b);
- a sub-step (1032) of bonding said breakwater (250) to said first cylindrical segment (211a) and to said second cylindrical segment (211b).

7. The method for manufacturing a tank of composite materials for transporting liquid or powdery products according to one of claims 1 to 6, **characterised in that** the step (101) of manufacturing a first cylindrical segment (211a) and a second cylindrical segment (211b) of composite materials includes:
- a first sub-step of winding reinforcement fibres on a cylindrical mandrel having an external diameter corresponding to the internal diameter of the tank to be manufactured,
- a second sub-step of applying a resin.

8. The method for manufacturing a tank of composite materials for transporting liquid or powdery products according to one of claims 1 to 7, **characterised in that** the step (106) of reinforcing the external surface of the intermediate structure (300) is performed by a filament winding method of winding resin-pre-impregnated reinforcement strips on the external surface of the intermediate structure (300).

9. The method for manufacturing a tank of composite materials for transporting liquid or powdery products according to one of claims 1 to 8, **characterised in that** it includes a laminating step (140) of applying a reinforcement layer at the junction between the first (211a) and/or second (211b) cylindrical segments, and at least part of said at least one breakwater (250), so as to cover at least part of said first (211a) and/or second (211b) cylindrical segments, and at least part of said at least one breakwater (250).

10. The method for manufacturing a tank of composite materials for transporting liquid or powdery products according to claim 9, **characterised in that** the reinforcement layer of the laminating step is positioned inside and/or outside the intermediate structure (300).

11. A tank of composite materials for transporting liquid or powdery products implemented by the manufacturing method according to one of claims 1 to 10, **characterised in that** it includes a vessel (200) having at least one storage compartment integrating at least one breakwater (250).

12. The tank of composite materials for transporting liquid or powdery products according to claim 11, **characterised in that** the breakwater (250) has two independent portions (250a, 250b), spaced apart from each other and positioned in a same transverse plane.

13. The tank of composite materials for transporting liquid or powdery products according to one of claims 11 to 12, **characterised in that** said tank is a tank vehicle, or a tank swap body, or a tank container or a tank car.
